# EUROPEAN PATENT APPLICATION

(11) **EP 4 130 990 A1**
(43) Date of publication of application: **08.02.2023**
(21) Application number: 21781641.2
(22) Date of filing: 30.03.2021
(51) Int. Cl.: G06F 9/4401, G06F 12/00, G06F 12/06, G06F 3/08, G06F 13/16

(54) **STORAGE SYSTEM**

(30) Priority: 01.04.2020 JP 2020065453
(71) Applicant: Panasonic Intellectual Property Management Co., Ltd., Osaka-shi, Osaka 540-6207 (JP)
(72) Inventor: KATO Isao, Osaka-shi, Osaka 540-6207 (JP); MAEDA Takuji, Osaka-shi, Osaka 540-6207 (JP); ONO Tadashi, Osaka-shi, Osaka 540-6207 (JP)
(74) Representative: Novagraaf International SA
(86) International application number: PCT/JP2021/013501
(87) International publication number: WO 2021/200926

(57) **Abstract**

A storage system includes a nonvolatile memory, a controller that controls writing and reading of data to and from the nonvolatile memory, a first interface, and a second interface, and is connected to a host device via the first interface and the second interface. While the host device is being started, a boot loader read from the nonvolatile memory is transferred to the host device via the second interface, and the first interface is initialized in parallel. After the host device is started, write data and read data to or from the nonvolatile memory via any one or both of the first interface and the second interface.

## Description

### TECHNICAL FIELD

The present disclosure relates to a storage system and its host device capable of connecting to each other.

### BACKGROUND ART

In recent years, storage systems such as a card-shaped secure digital (SD) card, a CompactFlash (Registered Trademark), a Solid State Drive (SSD) including a largecapacity nonvolatile storage element such as a flash memory and capable of performing high-speed data processing have come to become widespread in the market. Such a storage system is used by mounting the storage system on a host device such as a personal computer, a smartphone, a digital camera, an audio player, or an in-vehicle system a typical example of which is a car navigation system (see PTL 1).

Examples of the SD cards, which is a type of storage systems, include a card that supports an interface using a single-ended parallel transmission, and a card that supports a PCI (Peripheral Component Interconnect) Express (registered trademark) interface (abbreviation: PCIe interface) achieving a high-speed transmission by using a differential serial transmission. As the capacity of the storage system increases, efforts have also been made to improve the interface speed.

### Citation List

### Patent Literature

PTL 1: Unexamined Japanese Patent Publication No. 2016-167167

### SUMMARY OF THE INVENTION

However, the differential serial transmission that achieves a high-speed transmission has a problem that it takes time to start up the interface after the power is turned on, and it takes a longer time to transition to the state capable of transferring data than that the conventional single-ended parallel interface has required.

In the conventional single-ended parallel interface, however, because the data and the clock for taking out the data are supplied by the host device, the storage system, which is on the receiving side, can reproduce the data (take out the data) immediately after the data and the clock are input.

By contrast, with the differential serial transmission, the data is transferred with the clock superimposed thereon.

Therefore, on the receiving side, it is necessary to detect an edge of the data signal (signal transition), to adjust the phase of the internal clock, and to determine each bit in the data signal at correct timing (take out each bit at the correct timing).

A phase-locked loop (PLL) circuit is generally used to adjust the phase of the internal clock, and therefore, time is required for the phase adjustment to complete (for the PLL to be locked). (Note that, in the PCIe interface, a reference clock (REFCLK+, REFCLK-) fixed at 100 MHz is transmitted from the host (Root Complex side) to the device (Endpoint side), and this reference clock is designed to synchronize the operating frequencies of the host and the device, unlike the clock for taking out data (for strobing data) used in the single-ended parallel interface).

In addition to such a phase adjustment with the PLL, assuming an 8-bit parallel transmission, for example, the conventional single-ended parallel interface transmits one byte of data per clock. Therefore, it is not necessary for the receiving side to detect a byte break. However, in the differential serial transmission, the receiving side needs to detect a byte or a symbol break correctly and to reproduce (take out) the data as data in units of one byte or symbol. Hence, time is required, accordingly, in the byte synchronization or the symbol synchronization.

As an issue on the host device side, a host device is required to reduce the time from when the power is turned on to when the host device transitions to a system operating state after reading the startup boot loader, the operating system (OS), an application program, or the like from the storage system. For example, an in-vehicle system having a function of a car navigation system as well as that of a rearview monitor that displays an image captured by a camera mounted on a rear part of an automobile has been widely spread. However, such an in-vehicle system is required to display the image of the rearview monitor without any delay in order to prevent accidents, even when the user quickly switches the shift lever to the reverse range (the range where the vehicle is caused to move backward) immediately after the driver has started the engine.

In addition, in a digital still camera and a digital movie, the system is required to transition to an operating state (a state capable of shooting an image) as quickly as possible after the power is turned on, so that the user does not miss an opportunity for capturing a scene.

In order to enable the host device to transition to the system operating state as quickly as the host device is demanded to (achieve a high-speed startup), it is necessary to reduce the time required to read the startup boot loader, the OS, application program, and the like from the storage system.

The present disclosure has been made in view of the above problems, and an object of the present disclosure is to provide a storage system and a host device capable of reading a startup boot loader, an OS, an application program, and the like required to start the host device system quickly from the storage system.

A storage system according to the present disclosure includes a nonvolatile memory, a controller that controls writing and reading of data to and from the nonvolatile memory, a first interface, and a second interface, and is connected to a host device via the first interface and the second interface. While the host device is being started, a boot loader read from the nonvolatile memory is transferred to the host device via the second interface, and the first interface is initialized in parallel so that write data and read data to and from the nonvolatile memory is transferred once the host device is started.

Because the storage system according to the present disclosure includes two interfaces one of which uses the single-ended parallel transmission that requires a short interface startup time, and the other of which uses a high-speed differential serial transmission that exhibits a high data transfer speed after the interface is started, it is possible to reduce the time required in reading the startup boot loader, the OS, the application program, and the like that are necessary to stat the host device system from the storage system.

### BRIEF DESCRIPTION OF THE DRAWINGS

Fig. 1 is a diagram illustrating an example of a configuration of a storage system and a host device according to an exemplary embodiment of the present disclosure.
Fig. 2 is a comparative diagram illustrating an example of a configuration of a conventional storage system.
Fig. 3 is a diagram illustrating an example of a terminal arrangement in a secure digital (SD) card that is an example of the storage system.
Fig. 4 is a diagram illustrating an example of a terminal arrangement in a secure digital (SD) card that is an example of the storage system.
Fig. 5 is a diagram illustrating an example of a configuration of the storage system and a host device according to the exemplary embodiment of the present disclosure.
Fig. 6 is a diagram illustrating an example of a configuration of a conventional storage system and host device.
Fig. 7 is a diagram illustrating an example of a boot operation according to the exemplary embodiment of the present disclosure.
Fig. 8 is a diagram illustrating an example of the boot operation according to the exemplary embodiment of the present disclosure.
Fig. 9 is a diagram illustrating an example of the boot operation according to the exemplary embodiment of the present disclosure.

### DESCRIPTION OF EMBODIMENTS

### (Exemplary Embodiment)

An exemplary embodiment will now be explained in detail with reference to the drawings as appropriate. However, unnecessarily detailed explanations thereof are sometimes omitted. For example, detailed explanations on the matters that are already known, and redundant explanations about the configurations that are substantially identical will be sometimes omitted. This is to avoid the explanations below from being unnecessarily redundant, and to facilitate understanding of the explanations by those skilled in the art. It is assumed that elements given identical reference signs have identical functions across the exemplary embodiments.

It should be noted that the appended drawings and the following descriptions according to the present disclosure are provided to facilitate understanding of the present disclosure by those skilled in the art, and the appended drawings and the following descriptions are not intended to limit the subject matter described in the appended claims in any way.

### [1-1. Configuration and Operation of Conventional Storage System]

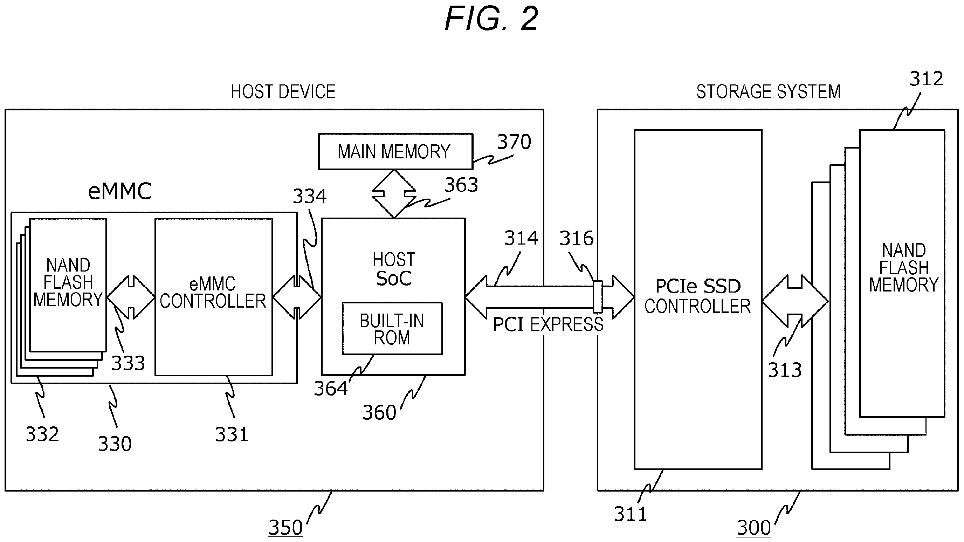

Fig. 2 is a comparative diagram illustrating an example of a configuration of a conventional storage system. Fig. 2 is a block diagram for explaining configurations of storage system 300 and host device 350.

Storage system 300 is described to be a solid state drive (SSD) including a PCIe interface, which is currently widely used, as an example.

Storage system 300 includes nonvolatile memory 312, controller 311 that controls writing and reading of data to and from the nonvolatile memory, nonvolatile memory interface (NAND interface) 313 that connects nonvolatile memory 312 and controller 311, and PCIe interface 314.

In addition, host device 350 includes host system-on-a-chip (SoC) 360, main storage (main memory) 370, memory interface 363 that connects SoC 360 and main memory 370, host SoC built-in ROM 364, and embedded multi-media card (eMMC) 330, and host device 350 is connected to storage system 300 via eMMC interface 314.

Embedded multi-media card (eMMC) 330 includes nonvolatile memory 332, eMMC controller 331 that controls writing and reading of data to and from the nonvolatile memory, nonvolatile memory interface (NAND interface) 333 that connects nonvolatile memory 332 and eMMC controller 331, and eMMC interface 334.

Note that main storage (main memory) 370 may be also mounted on (incorporated in) host SoC 360.

Alternatively, host SoC built-in ROM 364 may be externally mounted on host SoC 360.

In storage system 300, nonvolatile memory 312 is connected to a NAND flash memory, controller 311 is connected to PCIe SSD controller, interface 314 is connected to PCIe interface, and controller 311 is connected to nonvolatile memory 312, via an open NAND flash interface (ONFI), for example.

As described above, in conventional storage system 300 and host device 350, there is a problem that the starting time becomes extended when the boot loader is read from nonvolatile memory 312 via PCIe interface 314 and transferred to main memory 370 in the host device. Therefore, commonly practiced is to provide separate eMMC 330 including eMMC interface 334 that is a single-ended parallel interface, which requires a shorter time to enable any command and data to be transmitted, as a starting storage.

### [1-2. Configuration and Operation of Storage System According to Exemplary Embodiment]

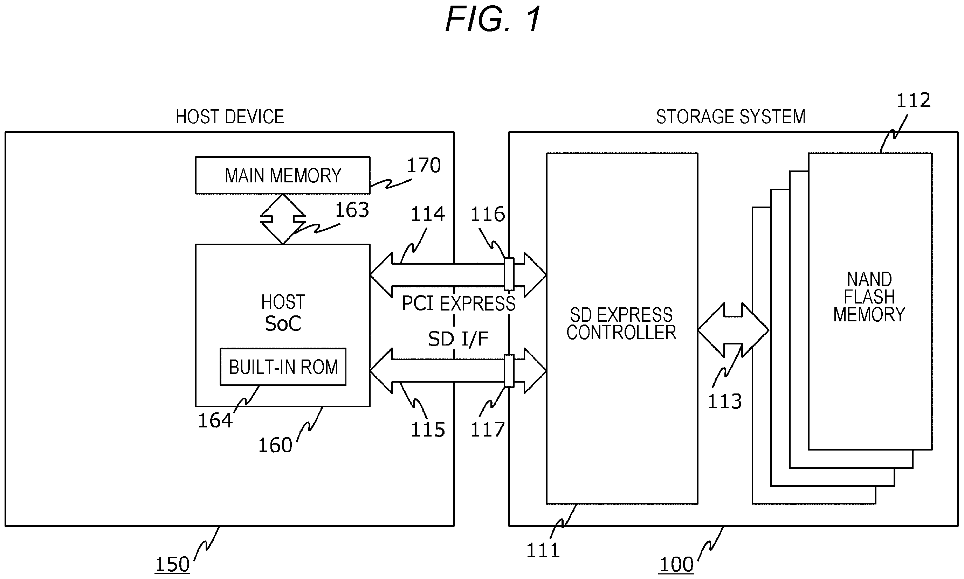

Fig. 1 is a diagram illustrating an example of a configuration of a storage system and a host device according to an exemplary embodiment of the present disclosure.

Storage system 100 includes nonvolatile memory 112, controller 111 that controls writing and reading of data to and from nonvolatile memory, nonvolatile memory interface (NAND interface) 113 that connects nonvolatile memory 112 and controller 111, first interface 114, and second interface 115.

Host device 150 also includes host system-on-a-chip (SoC) 160, main storage (main memory) 170, memory interface 163 that connects SoC 160 and main memory 170, and host SoC built-in ROM 164.

Host device 150 is connected to storage system 100 via first interface 114 and second interface 115.

Note that main storage (main memory) 170 may be also mounted on (incorporated in) host SoC 160.

Alternatively, host SoC built-in ROM 164 may be externally mounted on host SoC 160.

In the present exemplary embodiment, an example in which nonvolatile memory 112 of storage system 100 is configured as a NAND flash memory will be explained. An example in which controller 111 is configured as an SD-Express controller will also be explained. An example in which first interface 114 is configured as a PCIe interface using a high-speed differential serial transmission will also be explained. An example in which second interface 115 is configured as an SD interface using a single-ended parallel transmission will also be explained. An example in which controller 111 and nonvolatile memory 112 are connected via an open NAND flash interface (ONFI) will also be explained. These elements are exemplary, and specific elements can be changed as appropriate, within a scope not departing from the gist of the present disclosure.

First interface 114 is a PCIe interface capable of improving the transmission speed by using the differential serial transmission. Therefore, it takes time to start up the interface after first interface 114 is powered on. For this reason, it is widely known that first interface 114 takes a longer time to transition to a state capable of transferring data than second interface 115 (SD interface) that uses the conventional single-ended parallel transmission.

In the conventional single-ended parallel interface, however, because the data and the clock for taking out the data are supplied by the host device, the storage system, which is on the receiving side, can reproduce the data (take out the data) immediately after the data and the clock are input.

By contrast, with the differential serial transmission, the data is transferred with the clock superimposed thereon.

Therefore, on the receiving side, it is necessary to detect an edge of the data signal (signal transition), to adjust the phase of the internal clock, and to determine each bit in the data signal at correct timing (take out each bit at the correct timing).

A phase-locked loop (PLL) circuit is generally used to adjust the phase of the internal clock, and therefore, time is required for the phase adjustment to complete (for the PLL to be locked).

In addition, with the conventional single-ended parallel interface, assuming an 8-bit parallel transmission, for example, one byte of data is transmitted per clock. Therefore, it is not necessary for the receiving side to detect a byte break. However, in the differential serial transmission, the receiving side needs to detect a byte or a symbol break correctly and to reproduce (take out) the data as a data in units of one byte or symbol. Hence, time is required, accordingly, in the byte synchronization or the symbol synchronization.

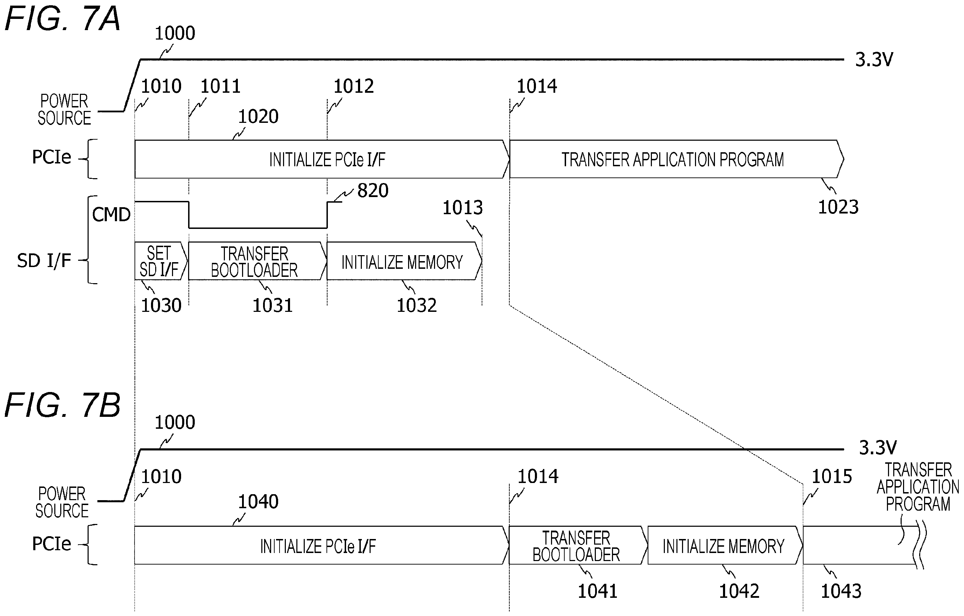

Fig. 7 is a diagram illustrating an example of a boot operation according to the exemplary embodiment of the present disclosure. A difference in the startup time between the PCIe interface that is a differential serial interface, and the SD interface that is a single-ended parallel interface will now be explained using Fig. 7.

In (A) of Fig. 7, a power source voltage 1000 represents a power source voltage supplied to storage system 100 and host device 150. A timing 1010 is a timing (time) at which the voltage of the power source 1000 reaches the level required for the circuits of storage system 100 and host device 150 to operate, and SD interface 115 then enters a state capable of transferring a command and data without any temporal delay. Timing 1014 indicates a timing (time) at which the initialization of PCIe interface 114 is finished and PCIe interface 114 becomes ready to transfer a command and data.

The initialization time of the PCIe interface includes the time required for the PLL to become locked, the time required for the byte or symbol synchronization to be established, and the time required for the interface configuration.

As described above, the time required for PCIe interface 114 using the differential serial transmission to transition to the state capable of transferring a command and data is extremely longer than that required in SD interface 115 using the single-end parallel transmission. Therefore, in a configuration in which the startup boot loader, the OS, and the application program are read from the storage system connected via the PCIe interface while host device 150 is being started, the system startup becomes delayed.

The inventors of the present invention have focused on the above, and storage system 100 and host device 150 according to the present exemplary embodiment are configured to include SD interface 115, which requires a shorter time to become ready to transfer a command or data, in addition to PCIe interface 114.

With this configuration, at the time of startup such as after the power is turned on, host device 150 can read the boot loader from nonvolatile memory 112 and transfer the boot loader to main memory 170 of the host device via SD interface 115, and perform the process of initializing PCIe interface 114 in parallel.

Once the initialization of PCIe interface 114 is finished and the PCIe interface becomes ready to transfer commands and data, the OS and the application program are read from nonvolatile memory 112 and transferred to main memory 170 of the host device via PCIe interface 114 having a higher interface speed (higher data transfer speed) than that of SD interface 115. In this manner, the system can be started within a shorter time in total.

Operations of storage system 100 and host device 150 at the time of startup will be explained in detail in [3 -1. Startup Process].

### [2-1. Configuration and Operation of Conventional Storage System]

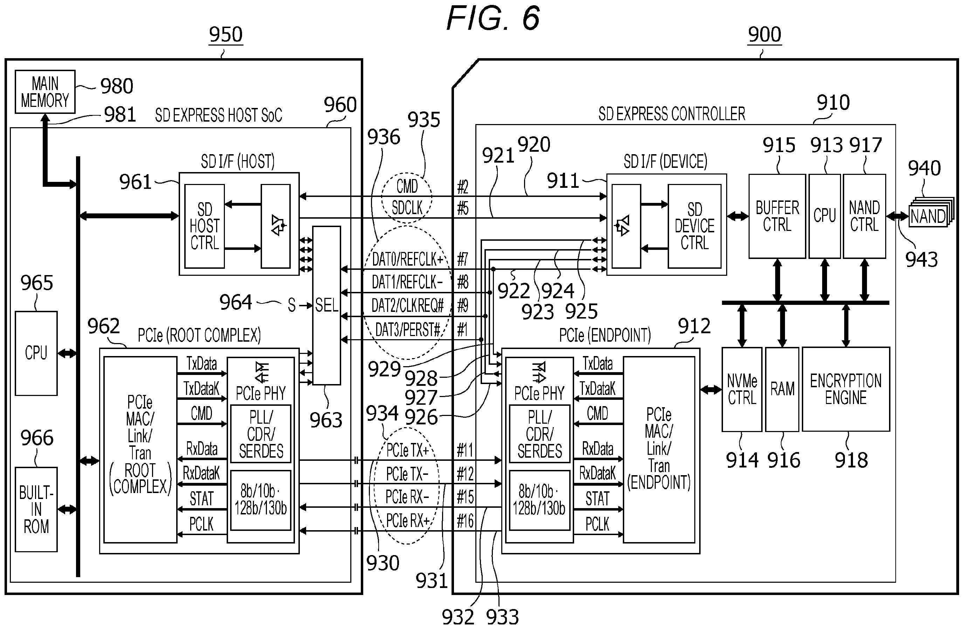

Fig. 6 is a diagram illustrating an example of a configuration of a conventional storage system and host device. Fig. 6 is a detailed block diagram illustrating configurations of storage system 900 and host device 950 that are one example of the conventional system.

Storage system 900 is an example of an SD Express card conforming to the standard of SD Specifications Part 1 Physical Layer Specification Version 7.0 or later, developed by the SD Association (SDA).

Storage system 900 includes nonvolatile memory 940, controller 910 that controls writing and reading of data to and from the nonvolatile memory, nonvolatile memory interface (NAND interface) 943 that connects nonvolatile memory 940 and controller 910, first interface (PCIe interface) dedicated signal line group 934, second interface (SD interface) dedicated signal line group 935, and first interface and second interface shared signal line group 936.

Controller 910 includes device-side transmission and reception circuit 912 for first interface (926 to 933), device-side transmission and reception circuit 811 for second interface (920 to 925), CPU 913 that controls the entire operation of the controller, NVMe control circuit 914 that performs control for writing and reading to and from nonvolatile memory 940 via first interface (926 to 933), buffer control circuit 915 that performs control for writing and reading to and from nonvolatile memory 940 via second interface (920 to 925), volatile memory 916 that temporarily stores therein data to be written or read to and from nonvolatile memory 940, NAND control circuit 917 that is connected to nonvolatile memory 940 and performs writing and reading to or from nonvolatile memory 940, and encrypting and decrypting circuit 918 that encrypts and decrypts data when encryption and decryption is required for data to be written to or read from nonvolatile memory.

Note that non-volatile memory express (NVMe) is a standard of a logical device interface for establishing a connection to a nonvolatile storage medium via a PCI Express (PCIe) interface (physical interface).

The configuration and the operation of controller 910 explained so far are already well-known matters, and thus a detailed explanations of the operation thereof will be omitted.

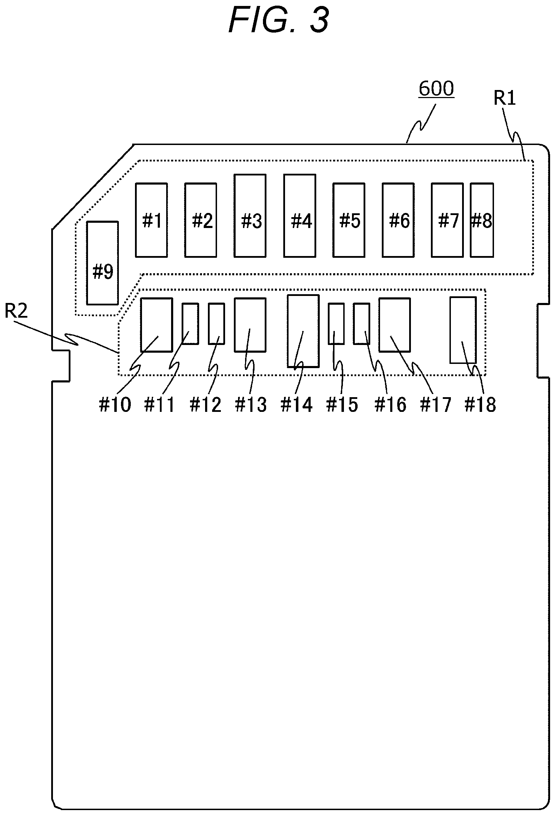

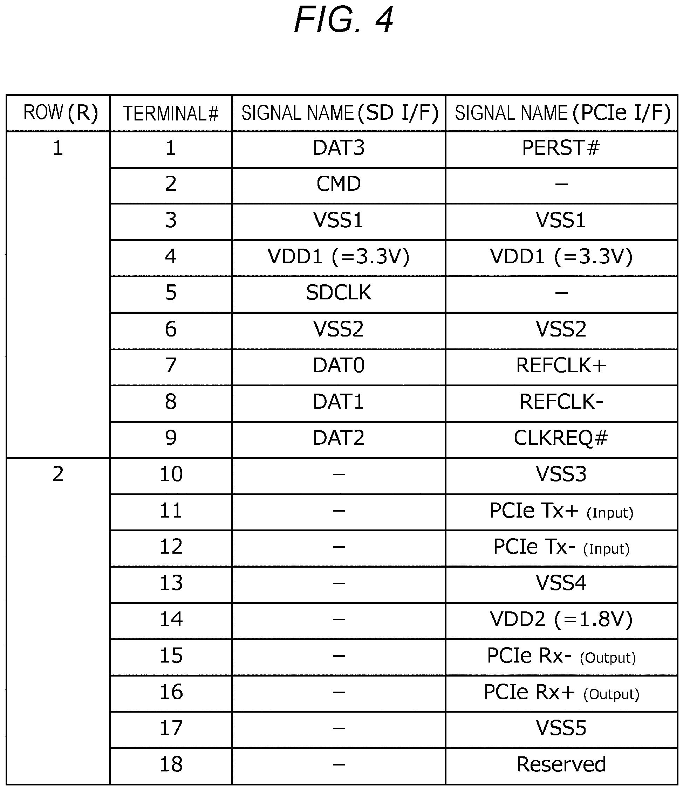

As mentioned earlier, conventional storage system 900 shares some of signal lines belonging to two different interfaces to conform to the standard of SD Specifications Part 1 Physical Layer Specification Version 7.0 or later, developed by the SD Association (SDA). Figs. 3 and 4 illustrate a terminal arrangement and a terminal table, respectively, of an SD Express card conforming to the standard of SD Specifications Part 1 Physical Layer Specification Version 7.0 or later, developed by the SD Association (SDA).

In Fig. 3, terminals of the conventional SD interface are arranged in R1 (row 1), and terminals of the PCIe interface are arranged in R2 (row 2).

However, according to this specification, some of the terminals of the conventional SD interface in R1 (row 1) are shared as the terminals of the PCIe interface, because it is difficult to arrange all of the terminals required for the PCIe interface in R2 (row 2) due to the physical size.

This specification is based on a condition that both of the PCIe interface and the SD interface are not used at the same time, that is, are used exclusively from each other.

### [2-2. Configuration and Operation of Storage System According to Exemplary Embodiment]

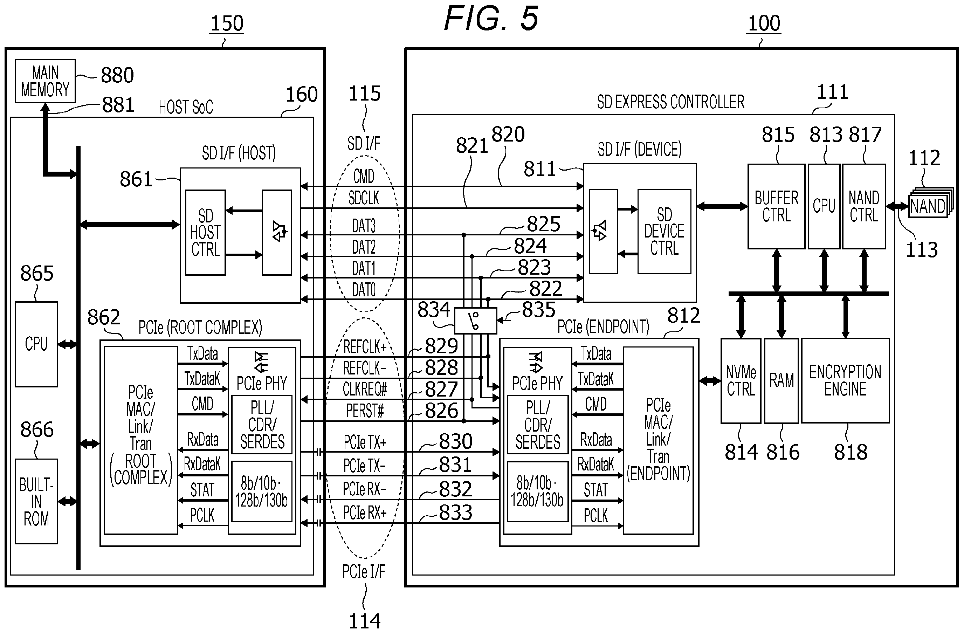

Fig. 5 is a diagram illustrating an example of a configuration of a storage system and a host device according to the exemplary embodiment of the present disclosure. Fig. 5 is a block diagram illustrating the configurations of storage system 100 and host device 150 according to the present exemplary embodiment in more detail.

Host device 150 also includes host system-on-a-chip (SoC) 160, main storage (main memory) 880, memory interface 881 that connects SoC 160 and main memory 880, and host SoC built-in ROM 866. Host device 150 is connected to storage system 100 via first interface 114 and second interface 115.

Host SoC 160 includes host-side transmission and reception circuit 862 for first interface 114, host-side transmission and reception circuit 861 for second interface 115, CPU 865 that controls the entire operation of the host SoC, and built-in ROM 866 for storing therein a computer program for starting host SoC.

Note that main storage (main memory) 880 may be also mounted on (incorporated in) host SoC 160.

Alternatively, host SoC built-in ROM 866 may be externally mounted on host SoC 160.

Storage system 100 includes nonvolatile memory 112, controller 111 that controls writing and reading of data to and from nonvolatile memory, nonvolatile memory interface (NAND interface) 113 that connects nonvolatile memory 112 and controller 111, first interface 114 (PCIe interface), and second interface (SD interface) 115.

Controller 111 includes device-side transmission and reception circuit 812 for first interface 114, device-side transmission and reception circuit 811 for second interface 115, CPU 813 that controls the entire operation of the controller, NVMe control circuit 814 that performs control for writing and reading to and from nonvolatile memory 112 via first interface 114, buffer control circuit 815 that performs control for writing and reading to and from nonvolatile memory 112 via second interface 115, volatile memory 816 that temporarily stores therein data to be written to and read from nonvolatile memory 112, NAND control circuit 817 that is connected to nonvolatile memory 112 and performs writing and reading to or from nonvolatile memory 112, and encrypting and decrypting circuit 818 that encrypts and decrypts data when encryption and decryption is required for data to be written to or read from the nonvolatile memory.

Note that non-volatile memory express (NVMe) is a standard of a logical device interface for establishing a connection to a nonvolatile storage medium via a PCI Express (PCIe) interface (physical interface).

At the same time, also included in the present exemplary embodiment is switch 834 that disconnects (switches OFF) a connection between signal line (822) for DAT0 of the SD interface and signal line (829) for the REFCLK+ signal of the PCIe interface, a connection between signal line (823) for DAT1 of the SD interface and signal line (828) for the REFCLK- signal of the PCIe interface, a connection between signal line (824) for DAT2 of the SD interface and signal line (827) for the CLKREQ# signal of the PCIe interface, and a connection between signal line (825) for DAT3 of the SD interface and signal line (826) for the PERST# signal of the PCIe interface, when some of the signal lines shared between first interface 114 and second interface 115 are to be unshared.

ON and OFF of switch 834 are switched by a logic level ("H" or "L") of control signal (select signal) 835.

A terminal arrangement and a terminal table of the SD Express card conforming to the standard of SD Specifications Part 1 Physical Layer Specification Version 7.0 or later, developed by the SD Association (SDA), are illustrated in Figs. 3 and 4.

In R1 (column 1) in Fig. 3, terminals of the conventional SD interface are arranged. In R2 (column 2), terminals of the PCIe interface are arranged. However, according to this specification, some of the terminals of the conventional SD interface in R1 (row 1) are shared as the terminals of the PCIe interface, because it is difficult to arrange all of the terminals required for the PCIe interface in R2 (row 2) due to the physical size.

This specification is based on a condition that both of the PCIe interface and the SD interface are not used at the same time, that is, are used exclusively from each other. In the present exemplary embodiment, because the configuration described above is used, when operating as a controller for an SD Express card conforming to the SD Specifications Part 1 Physical Layer Specification Version 7.0 or later standard by the SD Association (SDA), switch 834 is switched ON to connect some of the signal lines of the SD interface and some of the signal lines of the PCIe interface. In the configuration of storage system 100 and host device 150 according to the present exemplary embodiment illustrated in Fig. 1, which is intended to improve the startup speed, switch 834 is switched OFF to disconnect the connections between the signal lines of the SD interface and the signal lines of the PCIe interface, so that SD interface 115 and PCIe interface 114 can be used completely independently.

As for control signal (select signal) 835 for controlling ON and OFF of switch 834, for example, control signal (select signal) 835 may be connected to a pin (terminal) of controller 111, and the pin (terminal) of controller 111 may be connected to an external switch, so that the external switch is allowed to input the signal at the "H" or "L" level thereto. Alternatively, control signal (select signal) 835 may be connected to a pin (terminal) of controller 111, and the pin (terminal) of controller 111 may be pulled up or pulled down on a substrate where controller 111 is implemented, so as to allow the signal at the "H" or "L" level to be input.

Alternatively, the control signal (select signal) 835 may be connected to a generalpurpose input-output (GPIO) terminal of CPU 813 in controller 111, and the firmware of CPU 813 may be caused to input the signal at the "H" or "L" level.

### [3-1. Start-up Process]

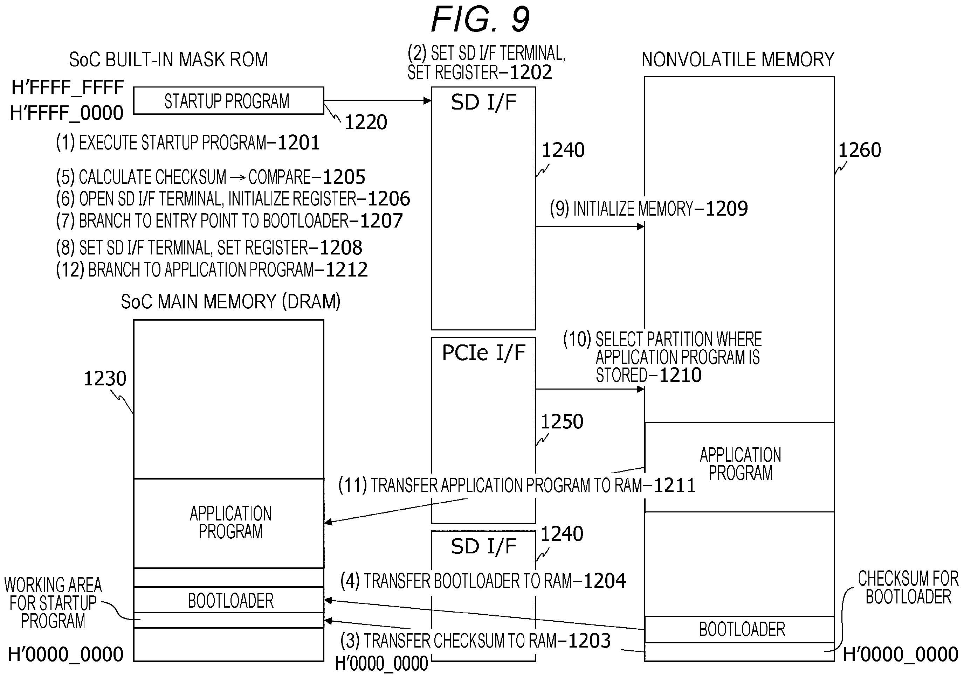

Fig. 9 is a diagram illustrating an operation sequence while host device 150 and storage system 100 are being started.

In Fig. 9, built-in ROM 1220 corresponds to built-in ROM 164 in host SoC 160. Built-in ROM 1220 stores therein a computer program for starting the SoC.

Main memory 1230 corresponds to main memory 170 in host SoC 160. At the time of startup, a boot loader, an OS, an application program, and the like are transferred and stored in main memory 1230, and some of the area in main memory 1230 is used as a working memory.

SD interface 1240 corresponds to SD interface (second interface) 114 that connects host device 150 and the storage system.

PCIe interface 1250 corresponds to PCIe interface (first interface) 114 that connects host device 150 and the storage system.

Storage 1260 corresponds to nonvolatile memory 112 in storage system 100. Logical memory maps are provided near the respective components, as required.

Startup operations taking place after the power is turned on, for example, will be now explained sequentially with reference to Fig. 9.
(1) After the release of a reset executed subsequently to the power-on (after the power is turned on), the built-in ROM startup program is executed. (1201)
(2) The built-in ROM startup program executes a setting process (terminal settings, register settings) for accessing the SD interface. (1202)
   As a result of this process, CMD 820 for SD interface 1240, 115 is driven to "L", and causes SD interface 1240, 115 to enter a boot operation mode.
(3) The checksum (512 bytes) for the boot loader, the checksum being stored in the nonvolatile memory of the storage system, is transferred to the main memory via SD interface 1240, 115. (Boot Operation 1203)
(4) The boot loader stored in the nonvolatile memory of the storage system is transferred to the main memory via SD interface 1240, 115. (Boot Operation 1204)
(5) The checksum is calculated from the boot loader data transferred to the main memory, and compared with the checksum for the boot loader having been transferred to the main memory from the nonvolatile memory of the storage system. Confirm the match and proceed to the next step. (1205)
(6) The terminal setting and the register setting for accessing SD interfaces 1240, 115 used by the built-in ROM startup program are then returned to the initial settings. (1206)
(7) The built-in ROM startup program is then branched to the entry point to the boot loader (the head address of the boot loader) on the main memory, and the boot loader is executed. (1207)
   The processes up to this point are executed by the built-in ROM startup program.
(8) The boot loader executes a setting process (terminal settings, register settings) for accessing SD interface 1240, 115. (1208)
(9) The boot loader gives an instruction for the process of memory initialization via the SD interface. (1209)
   The processes up to this point is executed by the boot loader program via SD interfaces 1240, 115.
(10) The partition storing therein an application program is selected and instructed via PCIe interface 1250. (1210)
(11) The application program stored in the nonvolatile memory of the storage system is transferred to the main memory via PCIe interface 1250, 114. (1211)
(12) By branching to the entry point to the application program (the head address of the application program) on the main memory, the application program is executed. (1212)

An operation when host device 150 and storage system 100 are started will now be explained along the time axis with reference to Fig. 7. In Fig. 7, timing 1011 is the timing at which the boot operation is started by setting CMD line 820 for SD interface 115 to "L".

Timing 1012 is the timing at which the transfer of the boot loader from storage system 100 to host device 150 is finished, and the boot operation is ended by setting CMD line 820 for SD interface 115 to "H".

Timing 1013 is the timing at which the initialization of the memory is finished, and reading and writing of data from and to nonvolatile memory 112 in storage system 100 become possible.
(A) illustrates a startup operation in storage system 100 and host device 150 according to the present exemplary embodiment.
(B) illustrates a startup operation when the transfer of the boot loader, the initialization of the memory, and the transfer of the OS and the application program are performed only via PCIe interface 114 while storage system 100 and host device 150 are being started.

While storage system 100 and host device 150 according to the present exemplary embodiment are being started, as illustrated in (A) of Fig. 7, the two interfaces, PCIe interface 114 and SD interface 115, are caused to operate in parallel. As a result, the boot loader is read from nonvolatile memory 112 in storage system 100 via SD interface 115, which starts up quickly, and the memory is initialized so that the OS and the application program stored in nonvolatile memory 112 in storage system 100 are made available for reading. During the time, PCIe interface 114, which starts up slowly, is initialized in parallel.

After the PCIe interface is started (after the timing indicated as 1014 in Fig. 7), the OS with a larger data capacity than the boot loader or the application program is read via PCIe interface 114, the transfer speed of which is higher than that of SD interface 115. In this manner, it is possible to reduce the total time required in starting the system.

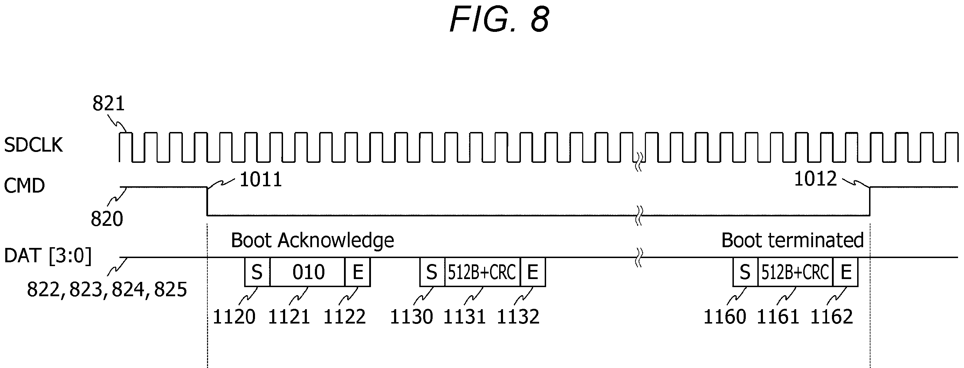

Fig. 8 is a timing chart of an operation for booting the eMMC.

In Fig. 8, SDCLK 821 indicates SDCLK (clock) for SD interface 115.

CMD 820 indicates the CMD (command) for SD interface 115.

DAT 822, 823, 824, and 825 indicates DAT0 (data 0), DAT1 (data 1), DAT2 (data), and DAT3 (data 3) for SD interface 115, respectively.

When host device 150 drives CMD 820 to "L" in accordance with timing 1011, SD interface 115 recognizes the command as an instruction to transition to the boot operation mode, and transmits a boot acknowledgement to host device 150 using the packets indicated as 1120, 1121, and 1122.

At this time, 1120 denotes a start bit, 1121 denotes a bit pattern "010" indicating the boot acknowledgement, and 1122 denotes an end bit.

After transmitting the boot acknowledgement to host device 150, the SD interface transmits the boot loader checksum to host device 150 using a packet including 1130, 1131, and 1132.

At this time, 1130 denotes a start bit, 1131 denotes the 512-byte boot loader checksum and the CRC corresponding thereto, and 1132 denotes an end bit.

Thereafter, the SD interface transmits the boot loader to host device 150, using a plurality of packets including 1160, 1161, and 1162, the number of packets being in a required number.

In this example, 1160 denotes a start bit; 1161 denotes 512 bytes of the boot loader and the CRC corresponding thereto; 1162 denotes an end bit; and 1160, 1161, and 1162 denote an nth packet, among those for transferring the boot loader, and are illustrated as the last packet in Fig. 8.

When the transfer of the final packet of the boot loader is finished, the boot operation mode is ended at timing 1012. (Boot terminated)

### [4. Advantageous Effects]

Because storage system 100 and host device 150 according to the present exemplary embodiment include two interfaces one of which uses the single-ended parallel transmission that requires a short interface start-up time, and the other of which uses a high-speed differential serial transmission that exhibits a high data transfer speed after the interface is started, it is possible to reduce the time required to read the startup boot loader, the OS, the application program, and the like that are necessary to stat up the host device system, from the storage system.

Furthermore, in storage system 100 and host device 150 according to the present exemplary embodiment, it is possible to improve the speed of the startup without providing a separate startup storage, so that the number of components as well as the cost of the system can be reduced.

In addition, storage system 100 and host device 150 according to the present exemplary embodiment are configured to include switch 834 so as to enable the signal lines of first interface 114 and the signal lines of second interface 115 to be used independently without being shared. Therefore, by switching switch 834 to ON and connecting some (826 to 829) of the signal lines of the PCIe interface and some (822 to 825) of the signal lines of the SD interface, respectively, it is possible to achieve the operation as an SD Express card compliant with the standard of SD Specifications Part 1 Physical Layer Specification Version 7.0 or later.

By contrast, when switch 834 is witched OFF to release (disconnect) the connections between the some (826 to 829) of the signal lines of the PCIe interface and the respective some (822 to 825) of the signal lines of the SD interface, SD interface 115 and PCIe interface 114 can be used completely independently.

With this configuration, at the time of startup such as after the power is turned on, host device 150 can read the boot loader from nonvolatile memory 112 and transfer the boot loader to the main memory 880 in the host device via SD interface 115, and perform the process of initializing PCIe interface 114 in parallel.

Once the initialization of PCIe interface 114 is finished and the PCIe interface becomes ready to transfer commands and data, the OS and the application program are read from nonvolatile memory 112 and transferred to main memory 170 of the host device via PCIe interface 114 having a higher interface speed (higher data transfer speed) than that of SD interface 115. In this manner, the system can be started within a shorter time in total.

Storage system 100 according to the present exemplary embodiment has the eMMC boot operation function incorporated in the functions of the SD interface.

The SD interface protocol has been originally formulated based on the Multi-Media Card (MMC) interface. After that, the SD and the Multi-Media Card (MMC), which includes the embedded Multi-Media Card (eMMC), have come to be incorporated with functions that are unique to the respective interfaces, and the boot operation function is also one of such unique functions, and is formulated as a specification of the embedded Multi-Media Card (eMMC).

Because the base protocols and the physical interfaces of the SD and the eMMC have many parts in common, the SD controller in the host generally supports the SD, the MMC including the eMMC, and the SDIO.

Therefore, SD interface 115 in storage system 100 according to the present exemplary embodiment supports the boot operation of the eMMC, but can also support the functions of the SD interface and the boot operation function by connecting to the general SD controller on the host.

### INDUSTRIAL APPLICABILITY

The present disclosure is suitable for the use in a host device and a storage system that are required to reduce a startup time.

### REFERENCE MARKS IN THE DRAWINGS

- 100: storage system
- 110: semiconductor storage
- 111: SD Express controller
- 112: nonvolatile memory (NAND flash memory)
- 113: nonvolatile memory interface (NAND interface)
- 114: PCI Express interface
- 115: SD interface
- 116: input-output port in storage system (for PCI Express interface)
- 117: input-output port in storage system (for SD interface)
- 150: host device
- 160: host SoC (system-on-a-chip)
- 163: memory interface
- 164: host Soc built-in ROM
- 170: main memory
- 120: Ethernet-to-PCIe interface converter
- 121: Ethernet interface
- 122: input-output port in storage system (for Ethernet interface)
- 123: memory interface
- 124: Ethernet-to-PCIe interface converter built-in ROM
- 180: main memory
- 300: storage system
- 311: PCIe SSD controller
- 312: nonvolatile memory (NAND flash memory)
- 313: nonvolatile memory interface (NAND interface)
- 314: PCI Express interface
- 330: eMMC (embedded Multi Media Card)
- 331: eMMC controller
- 332: nonvolatile memory (NAND flash memory)
- 333: nonvolatile memory interface (NAND interface)
- 350: host device
- 363: memory interface
- 364: host SoC built-in ROM
- 370: main memory
- 140: 2-to-1 selector switch
- 141: select signal
- 142: 2-to-1 selector switch input-output 1 (SD interface)
- 143: 2-to-1 selector switch input-output 2 (SD interface)
- 144: input-output port in storage system (for SD interface)
- 130: USB-to-SD interface converter
- 131: USB interface
- 132: input-output port in storage system (for USB interface)
- 600: SD Express card
- 811: SD interface circuit (device side) 1 (with boot support)
- 812: PCIe interface circuit (device side (endpoint))
- 813: microcomputer
- 814: NVMe control circuit
- 815: buffer control circuit
- 816: nonvolatile memory (RAM)
- 817: NAND control circuit
- 818: encryption circuit
- 820: CMD (command line) for SD interface
- 821: SDCLK (clock line) for SD interface
- 822: DAT0 (data line 0) for SD interface
- 823: DAT1 (data line 1) for SD interface
- 824: DAT2 (data line 2) for SD interface
- 825: DAT3 (data line 3) for SD interface
- 826: PERST# signal (reset signal) for PCIe interface
- 827: CLKREQ# signal for PCIe interface (clock request signal)
- 828: REFCLK- signal for PCIe interface (- signal of differential reference clock)
- 829: REFCLK+ signal for PCIe interface (+ signal of differential reference clock)
- 830: PCIe Tx+ for PCIe interface (+ signal of downlink differential signal transmission path)
- 831: PCIe Tx- for PCIe interface (- signal of downlink differential signal transmission path)
- 832: PCIe Rx- for PCIe interface (- signal of upstream differential signal transmission path)
- 833: PCIe Rx+ for PCIe interface (+ signal of uplink differential signal transmission path)
- 834: switch circuit
- 835: control signal for switch circuit
- 861: SD interface circuit (host side)
- 862: PCIe interface circuit (host side (root complex))
- 865: microcomputer
- 866: built-in ROM
- 880: main memory
- 911: SD interface circuit (device side) 2 (with no boot support)
- 912: PCIe interface circuit (device side (endpoint))
- 913: microcomputer
- 914: NVMe control circuit
- 915: buffer control circuit
- 916: nonvolatile memory (RAM)
- 917: NAND control circuit
- 918: encryption circuit
- 920: CMD (command line) for SD interface
- 921: SDCLK (clock line) for SD interface
- 922: DAT0 (data line 0) for SD interface
- 923: DAT1 (data line 1) for SD interface
- 924: DAT2 (data line 2) for SD interface
- 925: DAT3 (data line 3) for SD interface
- 926: PERST# signal (reset signal) for PCIe interface
- 927: CLKREQ# signal for PCIe interface (clock request signal)
- 928: REFCLK- signal for PCIe interface (- signal of differential reference clock)
- 929: REFCLK+ signal for PCIe interface (+ signal of differential reference clock)
- 930: PCIe Tx+ for PCIe interface (+ signal of downlink differential signal transmission path)
- 931: PCIe Tx- for PCIe interface (- signal of downlink differential signal transmission path)
- 932: PCIe Rx- for PCIe interface (- signal of upstream differential signal transmission path)
- 933: PCIe Rx+ for PCIe interface (+ signal of uplink differential signal transmission path)
- 934: first interface (PCIe interface) dedicated signal line group
- 935: second interface (SD interface) dedicated signal line group
- 936: first interface and second interface shared signal line group
- 961: SD interface circuit (host side)
- 962: PCIe interface circuit (host side (root complex))
- 965: microcomputer
- 966: built-in ROM
- 980: main memory
- 1000: power source
- 1010: timing of video recording
- 1011: timing to set CMD (command line) for SD interface to "L" level
- 1012: timing to set CMD (command line) for SD interface to "H" level
- 1013: timing for ending transfer of boot loader and memory initialization
- 1014: timing for ending PCIe interface initialization
- 1020, 1040: PCIe interface initialization period
- 1023: period of transfer of one or both of OS and application program
- 1030: SD interface setting period
- 1031: boot loader transfer period via SD interface
- 1032: memory initialization period
- 1041: boot loader transfer period via PCIe interface
- 1042: memory initialization period
- 1043: period of transfer of one or both of OS and application program
- 1120, 1130, 1160: start bit ("0")
- 1121: boot acknowledge pattern ("010")
- 1122, 1132, 1162: end bit ("1")
- 1131: checksum for boot loader
- 1161: nth sector of boot loader (final sector of boot loader transfer)
- 1201: startup program execution process
- 1202: SD interface terminal and register setting process
- 1203: boot loader checksum transfer process
- 1204: boot loader transfer process
- 1205: checksum calculating and comparing process
- 1206: terminal opening and register initialization process for SD interface
- 1207: branching process to boot loader
- 1208: SD interface terminal and register setting process
- 1209: SD initialization process
- 1210: process for selecting partition storing therein application program
- 1211: application program transfer process
- 1212: branching process to application program
- 1220: startup program
- 1230: SoC main memory (DRAM) map
- 1240: SD interface (host side and device side)
- 1250: PCIe interface (host side and device side)
- 1260: storage map (NAND flash memory)

## Claims

1. A storage system comprising:
a nonvolatile memory;
a controller configured to control writing and reading of data to and from the nonvolatile memory;
a first interface; and
a second interface,
wherein
the storage system is connected to a host device via the first interface and the second interface,
the storage system is configured, while the host device is being started,
to transfer a boot loader read from the nonvolatile memory to the host device via the second interface, and
to initialize the first interface in parallel with the transfer of the boot loader, and
the storage system is configured, after the host device is started, to transfer write data and read data to and from the nonvolatile memory via at least one of the first interface or the second interface.

2. The storage system according to Claim 1, wherein
the storage system is configured, after the host device is started, to transfer the write data and read data to and from the nonvolatile memory via both of the first interface and the second interface.

3. The storage system according to Claim 1 or 2, wherein
the first interface is a Peripheral Component Interconnect express (PCIe) interface, and
the second interface is a Secure Digital (SD) interface.
